(19) Europäisches Patentamt / European Patent Office / Office européen des brevets

(11) **EP 4 412 143 A1**

(12) **EUROPEAN PATENT APPLICATION**

(43) Date of publication:
**07.08.2024 Bulletin 2024/32**

(21) Application number: **24154576.3**

(22) Date of filing: **30.01.2024**

(51) International Patent Classification (IPC):
**H04L 9/00** $^{(2022.01)}$

(52) Cooperative Patent Classification (CPC):
**H04L 9/008**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.01.2023 KR 20230012728**

(71) Applicants:
• **Seoul National University R & DB Foundation
Seoul 08826 (KR)**

• **Industry Academic Cooperation Foundation
Chosun University
Dong-gu
Gwangju 61452 (KR)**

(72) Inventors:
• **NO, Jong Seon
06360 SEOUL (KR)**
• **LEE, Joon Woo
08826 SEOUL (KR)**
• **KIM, Young Sik
62067 GWANGJU (KR)**

(74) Representative: **Deambrogi, Edgardo et al
Jacobacci & Partners S.p.A.
Corso Emilia 8
10152 Torino (IT)**

(54) **METHOD AND DEVICE FOR REDUCING AMOUNT OF CALCULATION FOR GENERATING HIERARCHICAL GALOIS KEY SET FOR HOMOMORPHIC ENCRYPTION ROTATION OPERATION**

(57)     A server for performing an operation on a homomorphic ciphertext according to an embodiment of the present disclosure may be configured to: receive a first homomorphic ciphertext, a public key, and a first hierarchical Galois key set from a client device; in response to a request for generating a second hierarchical Galois key set for performing a rotation operation on the first homomorphic ciphertext of the client device, generate the second hierarchical Galois key set, based on the received public key and hierarchical Galois key set; and when a decomposition operation for a first Galois key included in the second hierarchical Galois key set overlaps with a decomposition operation for a second Galois key, first perform the decomposition operation for the first Galois key, and then substitute the decomposition operation for the second Galois key with a result of the decomposition operation for the first Galois key. In addition, the second hierarchical Galois key set may be sequentially generated according to a predetermined generation order.

fig.3

EP 4 412 143 A1

**Description**

CROSS-REFERENCE TO RELATED APPLICATION(S)

This application is based on and claims priority under 35 U.S.C. 119 to Korean Patent Application No. 10-2023-0012728, filed on January 31, 2023, in the Korean Intellectual Property Office, the disclosure of which is herein incorporated by reference in its entirety.

BACKGROUND OF THE INVENTION

1. Field of the invention

The present disclosure relates to a homomorphic encryption technology and, more specifically, to a method and a device for generating a hierarchical Galois key set for performing a rotation operation in homomorphic encryption.

2. Description of the Prior Art

Homomorphic encryption (HE) is an encryption method which allows an operation of data in an encrypted state. A result of an operation using ciphertexts becomes a new ciphertext, and a plaintext obtained by decrypting the ciphertext is the same as a result of an operation of the original data before encryption. The homomorphic encryption may be used to store personal information in an external medium while safely protecting the information or calculate the information. For example, the homomorphic encryption may be used, so that data can be outsourced to a commercial cloud service while encrypted and thus data processing can be performed while encrypted.

In the homomorphic encryption, multiple pieces of data are encrypted into one ciphertext, and when two different ciphertexts are operated, the operation is performed between pieces of data at corresponding locations. When data at a different location in a ciphertext is required to be operated in an encrypted state, the case where the location is required to be moved so as to enable the operation occurs. An operation that changes a location of data in a ciphertext in an encrypted state is only a homomorphic rotation operation which is a cyclic shift operation in an encrypted state, and the homomorphic rotation operation corresponds to an essential operation for using homomorphic encryption.

SUMMARY OF THE INVENTION

Homomorphic encryption corresponds to an encryption system which enables a predetermined arithmetic operation even in an encrypted state. Most homomorphic encryption systems require special operation keys for operations. A Galois key required for a rotation operation accounts for the largest amount among the operation keys. In a homomorphic ciphertext, many pieces of data are encrypted simultaneously in a one-dimensional vector form, and when a complex operation is performed, it is sometimes necessary to change a location of the homomorphic ciphertext. In the homomorphic encryption, location change can only be performed in the form of cyclic shift, and different keys are required depending on the degree of cyclic shift. However, the more complex the operation, the greater the number of types of degree of cyclic shift required, and accordingly, the amount of operation keys that a client should generate may range from 100 to 200 GB. Not only the amount of calculation to generate these operation keys, but also the amount of transmission required to transmit the operation keys may be burdensome for the client, which may be a huge burden on using a service. A technology developed in such a situation is precisely a hierarchical Galois key system. The hierarchical Galois key system is a system which can delegate a large portion of the client's operation key generation amount to a server. In this system, the amount of operation of the server when a hierarchical Galois key technology is used is much higher than the amount of operation of the client before the hierarchical Galois key technology is used. Although it is assumed that the server is configured by a computer having very high performance compared to the client, a reduction in the amount of operation of the server helps increase the capacity of the server.

According to embodiments of the present disclosure, a method for generating a hierarchical Galois key set with a minimum calculation amount by a server which has been delegated Galois key generation for a homomorphic encryption rotation operation from a client may be provided.

According to embodiments, a tree structure in which an operation key generation order for generating a hierarchical Galois key set is predetermined and an algorithm which uses a value used in a previous operation as it is may be provided.

A server for performing an operation on a homomorphic ciphertext according to an aspect of an embodiment may be configured to: receive a first homomorphic ciphertext, a public key, and a first hierarchical Galois key set from a client device; in response to a request for generating a second hierarchical Galois key set for performing a rotation operation on the first homomorphic ciphertext, generate the second hierarchical Galois key set, based on the public key and the hierarchical Galois key set; and in case that a decomposition operation for a first Galois key included in the second hierarchical Galois key set overlaps with a decomposition operation for a second Galois key, first perform the decomposition operation for the first Galois key, and then substitute the decomposition operation for the second Galois key with a result of the decomposition operation for the first Galois key.

In an embodiment, the generating of the second hierarchical Galois key set may include repeatedly performing a key-switching operation on each of all Galois keys included in the second hierarchical Galois key set by using the public key and the first hierarchical Galois key set, so as to generate all the Galois keys, and the key-switching operation may include at least one decomposition operation.

In an embodiment, the second hierarchical Galois key set may correspond to a lower level of the first hierarchical Galois key set, and each of the Galois keys included in the second hierarchical Galois key set may be generated by a combination of a plurality of elements included in the first hierarchical Galois key set which is a higher level.

In an embodiment, the server may be configured to determine, before generating the second hierarchical Galois key set, a generation order of the Galois keys included in the second hierarchical Galois key set, based on the number of key-switching operations required to generate each of the Galois keys, and sequentially generate each of the Galois keys of the second hierarchical Galois key set according to the generation order.

In an embodiment, the determining of the generation order for the second hierarchical Galois key set may include, with respect to a complete graph in which each element included in the second hierarchical Galois key set is configured as a node, configuring a weight of an edge which connects each node by the number of key-switching operations required between two nodes, and using a minimum spanning tree for the complete graph to determine the generation order.

In an embodiment, the minimum spanning tree may be obtained from the complete graph by using Prim's algorithm or Edmond's algorithm.

In an embodiment, a generation order of the first Galois key may have priority over a generation order of the second Galois key.

In an embodiment, the weight of the edge may be changed according to substitution of the overlapping decomposition operation.

A method for generating a hierarchical Galois key set for a homomorphic encryption rotation operation according to another aspect may include: determining a generation order of Galois keys included in the hierarchical Galois key set; and generating each of the Galois keys included in the hierarchical Galois key set according to the generation order, wherein, in the generating of each of the Galois keys included in the hierarchical Galois key set, a decomposition operation for a second Galois key, which overlaps with a decomposition operation included in a generation process of a first Galois key previously generated, may be substituted with a result of the decomposition operation for the first Galois key.

In an embodiment, the hierarchical Galois key set may be generated by a combination of a plurality of elements included in a hierarchical Galois key corresponding to a higher level of the hierarchical Galois key set.

In an embodiment, the hierarchical Galois key set may be generated by repeatedly performing a key-switching operation by using the elements included in the hierarchical Galois key corresponding to the higher level, and the key-switching operation may include at least one decomposition operation.

In an embodiment, the determining of the generation order of the Galois keys included in the hierarchical Galois key set may include, with respect to a complete graph in which each element included in the hierarchical Galois key set is configured as a node, configuring a weight of an edge which connects each node by the number of key-switching operations required between two nodes, and using a minimum spanning tree for the complete graph to determine the generation order.

In an embodiment, the minimum spanning tree may be obtained from the complete graph by using Prim's algorithm or Edmond's algorithm.

In an embodiment, the weight of the edge may be changed according to substitution of the overlapping decomposition operation.

In another aspect, a computer-readable non-transitory recording medium storing a computer program including at least one instruction configured to execute, by a processor, the method for generating a hierarchical Galois key set for a homomorphic encryption rotation operation according to the above embodiments may be provided.

According to embodiments of the present disclosure, an operation burden of a server configured to generate a hierarchical Galois key set can be effectively reduced. In an embodiment, overlapping of a decomposition operation is removed using a hoisted Galois key generation technique and thus a key-switching operation which substitutes a value of a result of a preceding decomposition operation is performed, so that the total amount of operation for generating a hierarchical Galois key set can be reduced by about 50%. In another embodiment, each element of a hierarchical Galois key set is sequentially generated according to a Galois key generation order determined to remove overlapping of a decomposition operation as much as possible, so that the amount of operation can be reduced by up to 80% compared to otherwise.

BRIEF DESCRIPTION OF THE DRAWINGS

Objects and effects of the present invention, and technical configurations for achieving the same will become clear with reference to embodiments which will be described later in detail in conjunction with the accompanying drawings. In describing the present invention, if it is determined that a detailed description of a known function or configuration may unnecessarily obscure the gist of the present invention, the detailed description will be omitted. In addition, the terms described later are terms defined in consideration of the structure, role, and function in the present invention, which may vary according to the intention or practice of a user or an operator.

However, the present invention is not limited to the embodiments disclosed below and may be implemented in a variety of different forms. Only these embodiments are provided to complete the disclosure of the present invention and to fully inform those skilled in the art of the scope of the invention, and the present invention is defined by the claims. Therefore, the definition should be made based on the content throughout this specification.

Throughout the specification, when a certain part "includes" a certain component, it means that it may further include other components without excluding other components unless otherwise stated.

Hereinafter, preferred embodiments of the present invention will be described in more detail with reference to the accompanying drawings.

The above and other aspects, features and advantages of the present disclosure will be more apparent from the following detailed description taken in conjunction with the accompanying drawings, in which:

FIG. 1 illustrates a client 200-server 100 system configured to perform a homomorphic encryption operation by using a hierarchical Galois key set according to an embodiment;
FIG. 2 illustrates an example of a method for generating a hierarchical Galois key set for a homomorphic encryption rotation operation by a server 100 which has been delegated Galois key set generation authority from a client 200, according to an embodiment;
FIG. 3 illustrates a conceptual diagram of a hoisted Galois key generation technique (b) according to an embodiment in which a decomposition operation is substituted in a conventional technique (a);
FIG. 4A illustrates an example of repeatedly performing a key-switching algorithm as many times as a required number of Galois keys according to the prior art;
FIG. 4B illustrates an example of performing a hoisted Galois key generation algorithm according to an embodiment;
FIG. 5 illustrates a complete graph for determining a generation order of a plurality of Galois keys according to an embodiment;
FIG. 6 illustrates a minimum spanning tree (MST) showing a generation order of a plurality of Galois keys according to an embodiment;
FIG. 7 illustrates an algorithm for generating a lower-level hierarchical Galois key from a hierarchical Galois key according to an embodiment; and
FIG. 8 illustrates an algorithm for generating a hierarchical Galois key from a public key according to an embodiment.

## DETAILED DESCRIPTION OF THE EXEMPLARY EMBODIMENTS

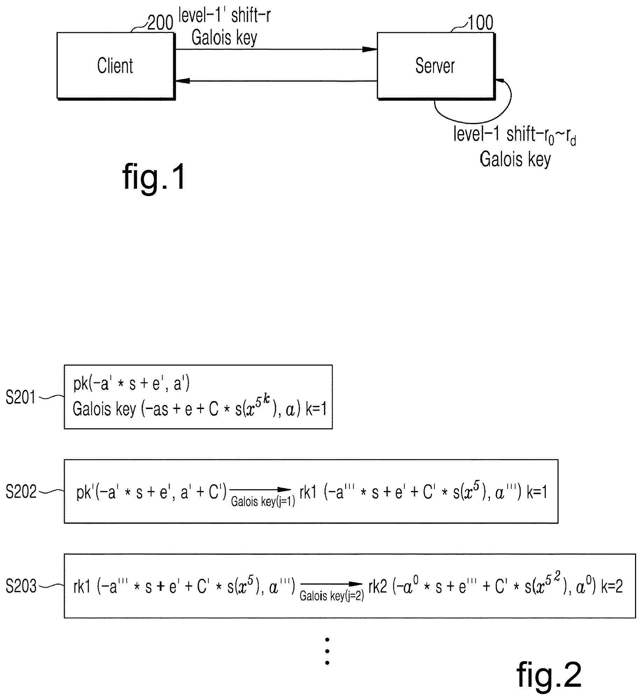

FIG. 1 illustrates a client 200-server 100 system configured to perform a homomorphic encryption operation by using a hierarchical Galois key set according to an embodiment.

In the client 200-server 100 system according to an embodiment, when a client 200 homomorphically encrypts its data (e.g., DNA information, financial information, medical information, etc.) and transmits the data to a server 100, the server 100 may perform a homomorphic encryption operation on a homomorphic ciphertext to provide various services (e.g., a neural network service, an AI-as-a-service, or a search service) to the client 200. Special operation keys are required to perform the operation on the homomorphic ciphertext, and such a special operation key may be generated using a secret key of the client 200 which is used when the homomorphic ciphertext is encrypted. A Galois key required for a rotation operation accounts for the largest amount among the operation keys. In the homomorphic ciphertext, many pieces of data are encrypted simultaneously in a one-dimensional vector form, and when a complex operation is performed, it is sometimes necessary to change a location of the homomorphic ciphertext. In homomorphic encryption, location change can only be performed in the form of cyclic shift, and different keys are required depending on the degree of cyclic shift. However, the more complex the operation, the greater the number of types of degree of cyclic shift required, and accordingly, the amount of operation keys that the client 200 should generate may range from 100 to 200 GB. Not only the amount of calculation to generate these operation keys, but also the amount of transmission required to transmit the operation keys to the server 100 may be burdensome for the client 200, which may be a huge burden on using a service. In an embodiment of the present disclosure, when the client 200 generates only a part of the entire operation keys required for the entire homomorphic encryption operation through a hierarchical Galois key system and transmits the same to the server 100, the server 100 may directly generate and use the remaining operation keys required to perform the homomorphic encryption operation by using only a public key received from the client 200.

A hierarchical Galois key is a kind of public key which may generate an operation key (evaluation key) for a rotation operation of a homomorphic ciphertext. The hierarchical Galois key may include one or more Galois keys. The hierarchical Galois key including the one or more Galois keys may be referred to as a hierarchical Galois key or a hierarchical Galois key set for convenience of description. For example, the hierarchical Galois key may include a Galois key corresponding to k-step movement. Since the hierarchical Galois key is a kind of public key, another electronic device (e.g., a server) having received the hierarchical Galois key may generate an operation key for a rotation operation by using the hierarchical Galois key. Key generation subject and method are different from the case of generating a Galois key by the client 200 by using a secret key in the prior art.

In an embodiment, the server 100 may generate a plurality of rotation operation keys when can perform step movement corresponding to multiples of k by using a Galois key corresponding to k-step movement. For example, when the hierarchical Galois key is a Galois key with k=1, in order to generate a rotation operation key for 13-step movement, the rotation operation key may be generated by using the Galois key with k=1 13 times. As another example, when the hierarchical Galois key set includes Galois keys with k={1, -1, 2, -2, 4, -4, 8, -8}, in order to generate a rotation operation key for 13-step movement, the rotation operation key may be generated by sequentially using a Galois key with k=8, a Galois key with k=4, and a Galois key with k=1.

In an embodiment, the client 200 may generate a hierarchical Galois key by the following method.

The client 200 may define sets $C = \{q_0, \cdots, q_L\}$ and $B = \{p_0, \cdots, p_{K-1}\}$ of different prime numbers. All of the sets may be used as variables (basis) of a residue number system (RNS) system. The client 200 may define another set $M = \{t_0, \cdots, t_{\overline{K}-1}\}$ of prime numbers as master special prime numbers. In the case of

$$Q = \prod_i q_i, P = \prod_i p_i, T = \prod_t t_t$$

, the names thereof may be sequentially renamed $C \cup B = \{\overline{q_0}, \cdots, \overline{q_{L+K}}\}$ for convenience of description.

A decomposition number (dnum) is $\alpha = (L + 1)/dnum$, and the client 200 may define a value obtained by grouping and multiplying prime numbers as

$$\{Q_j\}_{0 \le j < dnum} = \left\{ \prod_{i=j\alpha}^{(j+1)\alpha - 1} q_i \right\}$$

. The client 200 may define

$$\hat{Q}_i = \prod_{j \ne i} Q_i$$

, and allow $|P| \ge \max(Q_j)$ to be satisfied.

A master decomposition number (mdnum) is $\alpha_m = (L + 1)/mdnum$, and a value obtained by grouping and multiplying prime numbers may be defined as

$$\{\overline{Q_j}\}_{0 \le j < mdnum} = \left\{ \prod_{i=j\alpha_m}^{(j+1)\alpha_m - 1} \overline{q_i} \right\}$$

. The client 200 may define

$$\overline{\hat{Q}_i} = \prod_{j \ne i} \overline{Q_i}$$

, and allow $|T| \ge \max(\overline{Q_j})$ to be satisfied.

The client 200 may produce a polynomial,

$$\overline{b_{k,i}} = -\overline{a_{k,i}}s + \overline{e_{k,i}} + T \cdot \overline{\hat{Q}_i} \cdot \left[ \overline{\hat{Q}_i}^{-1} \right]_{\overline{Q_i}} \cdot s(X^{5^k})$$

, which has $mswk_k = \{mswk_{k,i}\}_{i=0, \cdots, mdnum - 1}$ which is a key rotated as much as k from a secret key polynomial (s), and has a form of

$$mswk_{k,i} = (\overline{b_{k,i}}, \overline{a_{k,i}}) \in R_{PQT}^2$$

, wherein $\overline{a_{k,i}}$ is extracted from $R_{PQT}$ in a uniform distribution. The client 200 may generate hierarchical Galois keys for $k = 1, -1, 2, -2, 4, -4, \cdots, -2^{n-2}, 2^{n-2}, 2^{n-1}$ respectively. As an example, the k value may be determined as a value allowing a value of $2^{n-1}$ from $-2^{n-1}$ to be produced as the sum of combinations that allow overlap. The hierarchical Galois key may be defined such that in a form of $(b_e, a_e) \in R_{PQ}^2$, $a_e$ is an element uniformly extracted from $R_{PQ}$, and $b_e = -a_e s + e_e$ is made.

The server 100 may generate a plurality of rotation operation keys by repeatedly performing a rotation operation on a public key by using a hierarchical Galois key. The hierarchical Galois key may be generated to correspond to k-step movement, and a required movement value may be determined depending on the type of homomorphic encryption operation. The server 100 may generate a plurality of rotation operation keys corresponding to multiples of k-step movement by using the hierarchical Galois key corresponding to the k-step movement. The server 100 may first request a Galois key corresponding to a required movement value from the client 200, and request one or more hierarchical Galois keys corresponding to different step movements. The one or more hierarchical Galois keys may generate a plurality of rotation operation keys corresponding to different step movements, respectively. In various embodiments, when a hierarchical Galois key set includes Galois keys with k={1, -1, 2, -2, 4, -4, 8, -8}, the server 100 may generate a rotation operation key by combining different k-step Galois keys. For example, the server 100 may sequentially use a Galois key with k=8 and a Galois key with k=2 in order to generate a rotation operation key for 10-step movement.

In an embodiment, when the client 200 generates only a Galois key with a level of l' and a movement value (shift) of r and transmits the Galois key to the server 100, the server 100 may generate a Galois key with a level of 1 and movement values of $r_0, ..., r_{d-1}$. Various embodiments of the present disclosure include a method capable of significantly reducing the amount of calculation when the server 100 generates a Galois key. In an embodiment, a hoisted Galois key generation technique will be described, and in another embodiment, a technique for determining a generation order before generating a plurality of Galois keys, so as to generate Galois keys according to the generation order will be described.

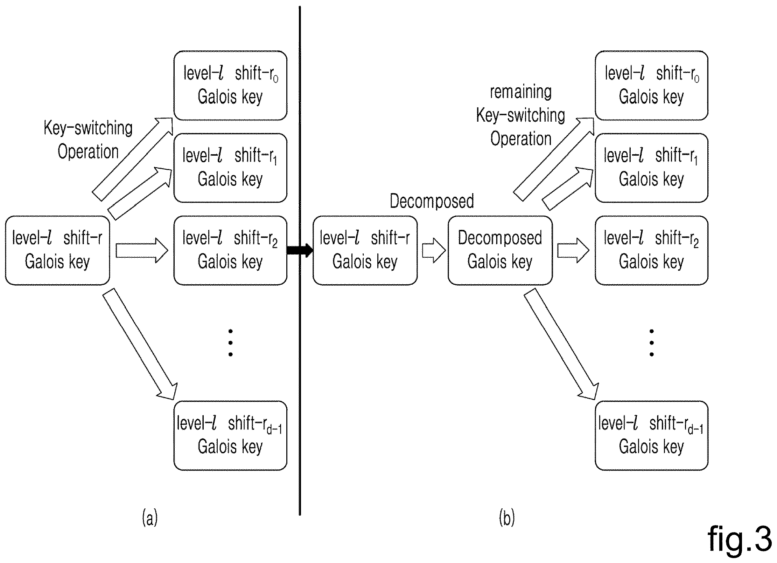

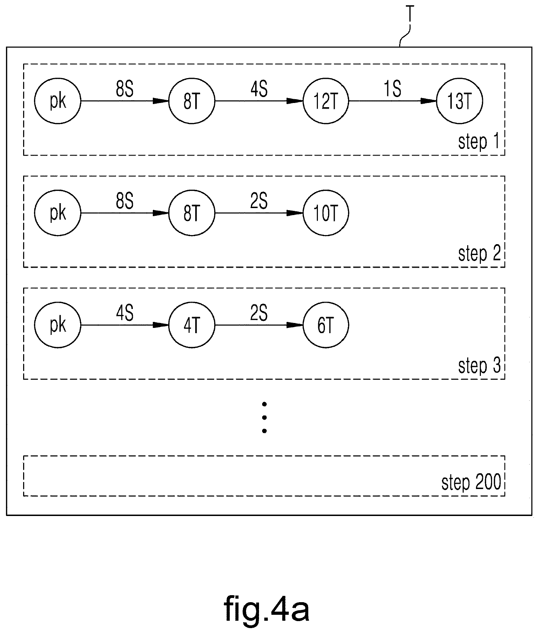

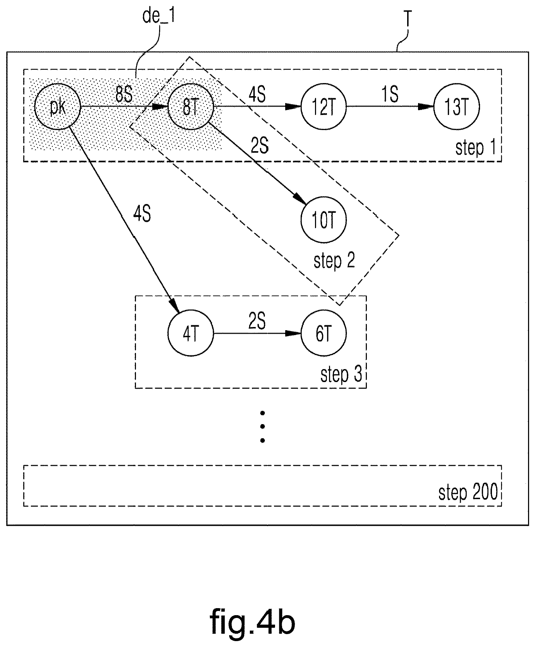

The hoisted Galois key generation technique according to an embodiment is an improvement on the existing technology which requires d times of execution of a key-switching algorithm when d Galois keys are required to be generated from one Galois key. In the hoisted Galois key generation technique, all decomposition operations, which take up the largest amount of operation among the key-switching algorithm, are unified into and substituted by one decomposition operation and d remaining other operations. (d-1) decomposition operations included in the entire key-switching algorithm are reduced, so that the total amount of operation can be reduced. The hoisted technique corresponds to a method of minimizing the number of operations by interchanging or combining operations without changing functions thereof. The hoisted Galois key generation technique will be described in detail in FIGS. 3 and 4.

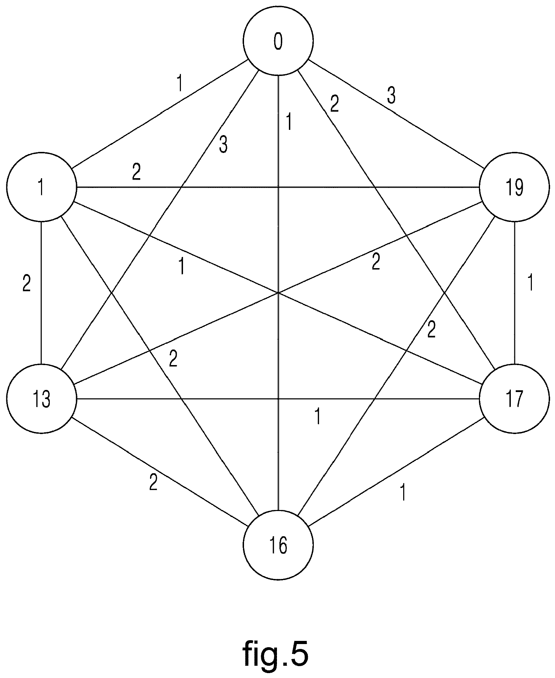

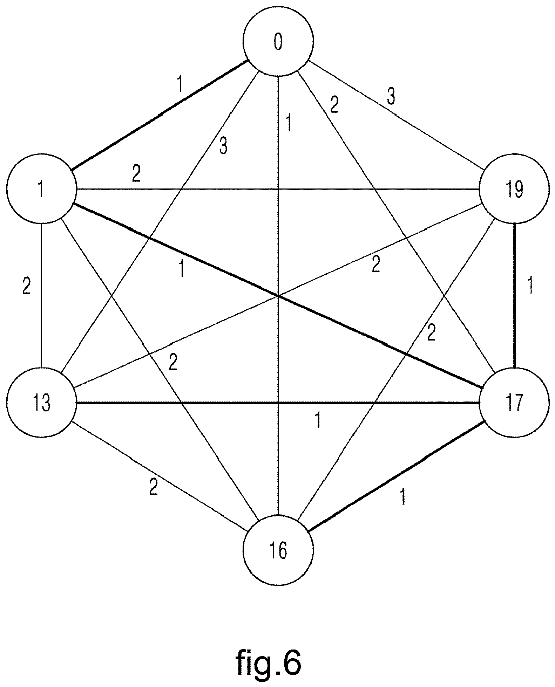

The server 100 according to an embodiment may first determine a generation order of a plurality of Galois keys to be generated, and then sequentially generate the Galois keys according to the generation order. When several types of Galois keys are required to be generated from a determined set of higher Galois keys, the server 100 may determine an efficient Galois key generation order by removing overlapping of calculation. The number of operations required to generate a Galois key of step b from a Galois key of step a may be set as the edge of a graph to configure a complete graph, and then a minimum spanning tree (MST) which represents a Galois key generation order may be derived by using Prim's algorithm or Edmond's algorithm which solves a minimum spanning tree problem of the graph. According to the minimum spanning tree (MST) which refers to a Galois key generation order, the entire Galois keys may be generated by the minimum number of operations. This will be described in detail in FIGS. 5 and 6.

The server 100 configured to perform an operation on a homomorphic ciphertext at a request of the client 200 may be configured to receive a first homomorphic ciphertext, a public key, and a first hierarchical Galois key set from the client 200 device, in response to a request for generating a second hierarchical Galois key set for performing a rotation operation on the first homomorphic ciphertext, generate the second hierarchical Galois key set, based on the public key and the hierarchical Galois key set, and when a decomposition operation for a first Galois key included in the second hierarchical Galois key set overlaps with a decomposition operation for a second Galois key, first perform the decomposition operation for the first Galois key, and then substitute the decomposition operation for the second Galois key with a result of the decomposition operation for the first Galois key.

The server 100 may be configured to repeatedly perform a key-switching operation on each of all Galois keys included in the second hierarchical Galois key set by using the public key and the first hierarchical Galois key set, so as to generate all the Galois keys, and the key-switching operation may include at least one decomposition operation. The second hierarchical Galois key set may correspond to a lower level of the first hierarchical Galois key set, and each of the Galois keys included in the second hierarchical Galois key set may be generated by a combination of a plurality of elements included in the first hierarchical Galois key set which is a higher level.

The service 100 may be configured to determine, before generating the second hierarchical Galois key set, a generation order of the Galois keys included in the second hierarchical Galois key set, based on the number of key-switching operations required to generate each of the Galois keys, and sequentially generate each of the Galois keys of the second hierarchical Galois key set according to the generation order. A generation order of the first Galois key may have priority over a generation order of the second Galois key.

The server 100 may be configured to configure, with respect to a complete graph in which each element included in the second hierarchical Galois key set is configured as a node, a weight of an edge which connects each node by the number of key-switching operations required between two nodes, and use a minimum spanning tree for the complete graph to determine the generation order. The weight of the edge may be changed according to substitution of the overlapping decomposition operation.

The server 100 may be configured to obtain the minimum spanning tree from the complete graph by using the Prim's algorithm or Edmond's algorithm. FIG. 2 illustrates an example of a method for generating a hierarchical Galois key set for a homomorphic encryption rotation operation by a server 100 which has been delegated Galois key set generation authority from a client (200), according to an embodiment.

In an embodiment, the server 100 may generate a plurality of homomorphic rotation operation keys by using specific public keys received from the client 200. The specific public keys may include at least one hierarchical Galois key (e.g., k=1) and a public key (pk) generated using a private key of the client 200. A key for a homomorphic encryption operation may be expressed as a polynomial. In step S201, the server 100 may receive a hierarchical Galois key and a public key (pk) of the client 200 as a specific public key from the client 200. The public key (pk) may be defined by a secret key (s), a polynomial (a) uniformly and randomly extracted from a finite number of sets of polynomials, a small error (e), and a large constant (C). The hierarchical Galois key is a kind of public key, corresponds to k-step movement, and may be defined by a secret key (s), a polynomial (a) uniformly and randomly extracted from a finite number of sets of polynomials, a small error (e), and a large constant (C).

In step S202, the server 100 may generate pk' by partially modifying the public key (pk), and perform a rotation operation on the modified public key (pk') by using the hierarchical Galois key, so as to generate a rotation operation key (rk1) with k=1.

In step S203, the server 100 may perform a rotation operation again on the rotation operation key (rk1) generated in the previous step by using the hierarchical Galois key, so as to generate a rotation operation key (rk2) with k=2. The server 100 may generate a plurality of rotation operation keys by repeatedly performing a rotation operation by using the hierarchical Galois key, and if the hierarchical Galois key corresponds to k-step movement, the plurality of rotation operation keys generated may correspond to multiples of k-step movement. FIG. 3 illustrates a conceptual diagram of a hoisted Galois key generation technique (b) according to an embodiment in which a decomposition operation is substituted in a conventional technique (a).

The hoisted Galois key generation technique according to an embodiment may be defined as follows.

It is first assumed that there is a Galois key with a level of l' and a movement value (shift) of r, received from the client 200, and is assumed that the server 100 is required to generate a Galois key with a level of 1 and movement values of $r_0, ..., r_{d-1}$. In this case, an operation required to perform each operation which generates each Galois key is called a key-switching algorithm. Referring to case (a), an independent key-switching algorithm has been conventionally performed for each movement value. On the other hand, as shown in case (b), the hoisted Galois key generation technique may first generate one decomposed Galois key through one decomposition operation and then perform the remaining operations as independent processes, so as to complete the entire operations. The entire decomposition operations included in the existing key-switching algorithm are unified into one decomposition operation, and the (d-1) remaining decomposition operations are not required to be performed. According to such an embodiment, the amount of operation required when the server 100 attempts to generate an operation key according to a hierarchical Galois key technique may be significantly reduced. According to the hoisted Galois key generation technique, compared to performing d decomposition operations by executing the existing d key-switching algorithms, the total amount of operation may be reduced by about 50% by performing one decomposition operation and the remaining operations other than the decomposition operation in a key-switching algorithm d times. This may lead to significant performance improvement in a homomorphic encryption technology, as a situation in which the hoisted Galois key generation technique can be applied may frequently occur since there are many times when multiple Galois keys are generated simultaneously. FIG. 4A illustrates an example of repeatedly performing a key-switching algorithm as many times as a required number of Galois keys according to the prior art, and FIG. 4B illustrates an example of performing a hoisted Galois key generation algorithm according to an embodiment. FIGS. 4A and 4B assume that the server 100 generates a Galois key T set at level 0 by receiving a public key (pk) and a Galois key at level 1 S={1, -1, 2, -2, 4, -4, 8, -8} from the client 200. In this case, T={13, 10, 17, 4, 6, 7, 8, ... }, and the number of elements of T is n(T)=200.

Referring to FIG. 4A, a key-switching algorithm is repeatedly performed 200 times to generate all Galois keys of the Galois key T set. Element 13 of the T set is referred to as 13T, and as in step 1, 13T may be generated by sequentially applying elements 8S, 4S, and 1S of a set S from the public key (pk). In order to generate 10T, 8S and 2S may be sequentially applied from the public key (pk) as in step 2. In this case, the calculation of applying 8S to pk is included in both step 1 and step 2 and corresponds to an overlapping operation.

The server 100 according to an embodiment may first generate a decomposed Galois key by first performing an operation corresponding to an overlapping operation among decomposition operations included in the entire key-switching algorithm before generating all the Galois keys of the Galois key T set. By using the decomposed Galois key to remove the overlapping operation and performing the remaining operations of the key-switching algorithm, all the Galois keys of the Galois key T set may be generated. Referring to FIG. 4B, if a decomposition operation (de_1) which applies the element 8S of the set S to the public key (pk) is first calculated to generate a decomposed Galois key 8T, in step 2, 10T may be generated by applying 2S, which is the remaining operation of the key-switching algorithm, by using 8T.

Compared to FIG. 4A, unlike in FIG. 4A where the key-switching algorithm is repeatedly performed 200 times, in FIG. 4B, a substituted key-switching algorithm including the remaining operations other than at least one decomposition operation first calculated is performed 200 times. FIG. 5 illustrates a complete graph for determining a generation order of a plurality of Galois keys according to an embodiment, and FIG. 6 illustrates a minimum spanning tree (MST) showing a generation order of a plurality of Galois keys according to an embodiment. The above embodiment may be called a graph reduction method.

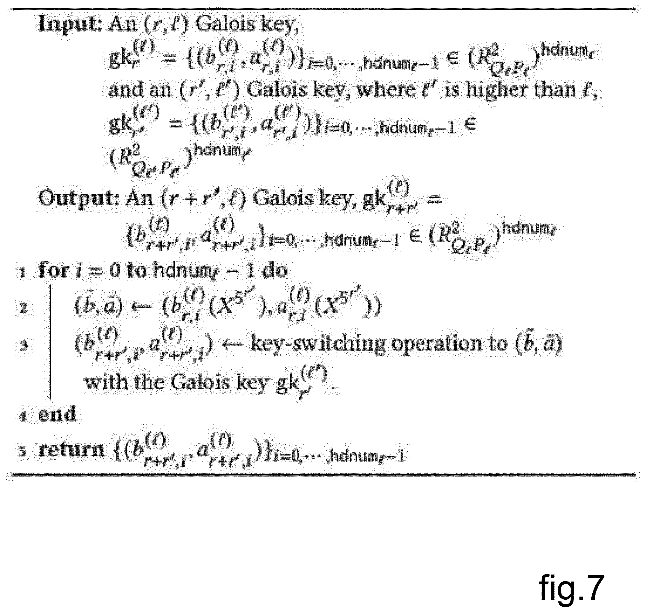

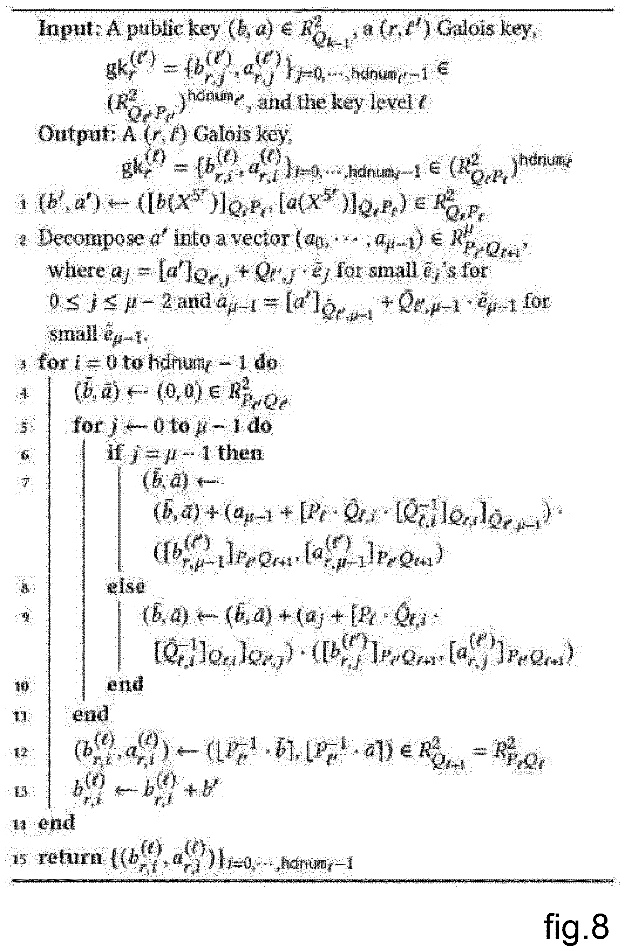

The graph reduction method first assumes that the server 100 has a public key and a total of 10 higher Galois keys of +-1, +-2, +-4, +-8, and +-16 among higher-level Galois keys. In this case, it is assumed that five lower-level Galois keys are required to be generated: 1, 13, 16, 17, and 19. In this case, the public key is configured as a node corresponding to 0, and the remaining required Galois keys are configured as nodes, respectively and then an edge is connected to two random nodes, wherein the edge is configured by the number of key-switching algorithms required to generate one Galois key from another Galois key. After configuring a complete graph as shown in FIG. 5, a tree (minimum spanning tree (MST)) with the minimum sum of edge weights as shown in FIG. 6 is found through, for example, Prim's algorithm. The minimum spanning tree is indicated by a red line. The server 100 starts from node 0 corresponding to the public key and generates each operation key along the MST by using a key-switching algorithm and a hoisted technique. According to such an embodiment, the amount of operation required when the server 100 attempts to generate an operation key according to the hierarchical Galois key technique may be significantly reduced. When a plurality of Galois keys are sequentially generated according to the minimum spanning tree (MST) which represents a Galois key generation order, the amount of operation can be reduced by 50 to 80% compared to the case where the order is not determined. FIG. 7 illustrates an algorithm for generating a lower-level hierarchical Galois key from a hierarchical Galois key according to an embodiment, and FIG. 8 illustrates an algorithm for generating a hierarchical Galois key from a public key according to an embodiment.

When a Galois key corresponding to k-step movement is assumed, the hierarchical Galois key system requires a different type of operation to generate a hierarchical Galois key at level 1. In this case, 1 is smaller than k-1. One corresponds to a PubToGal operation of generating a level-transformed Galois key from a public key, and the other one corresponds to a GalToGal operation of generating a level-transformed Galois key from the existing level-transformed Galois key for another cyclic shift. By combining the PubToGal operation and the GalToGal operation, the public key and all Galois keys at a key level higher than 1 may be generated. The Gal-ToGal operation may be implemented like the algorithm in FIG. 7, and the PubToGal operation may be implemented like the algorithm in FIG. 8. The key-switching algorithm described in the hoisted Galois key generation technique described above is the same as the key-switching operation in FIG. 7. Each step of FIG. 2 described above may be implemented by the algorithm of FIG. 8.

The effects of the present invention are not limited to those mentioned above, and other effects not mentioned will be clearly understood by those skilled in the art from the description below.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

Therefore, the embodiments described above are provided to completely inform those skilled in the art of the scope of the invention, and thus the embodiments should be understood that they are illustrative in all respects and not limiting, and the present invention is only defined by the scope of the claims.

**Claims**

1. A server for performing an operation on a homomorphic ciphertext, the server being configured to:

   receive a first homomorphic ciphertext, a public key, and a first hierarchical Galois key set from a client device;
   in response to a request for generating a second hierarchical Galois key set for performing a rotation operation on the first homomorphic ciphertext, generate the second hierarchical Galois key set, based on the public key and the first hierarchical Galois key set; and
   in case that a decomposition operation for a first Galois key included in the second hierarchical Galois key set overlaps with a decomposition operation for a second Galois key, first perform the decomposition operation for the first Galois key, and then substitute the decomposition operation for the second Galois key with a result of the decomposition operation for the first Galois key.

2. The server of claim 1, wherein the generating of the second hierarchical Galois key set comprises repeatedly performing a key-switching operation on each of all Galois keys included in the second hierarchical Galois key set by using the public key and the first hierarchical Galois key set, so as to generate all the Galois keys, and
   the key-switching operation comprises at least one decomposition operation.

3. The server of claim 2, wherein the second hierarchical Galois key set corresponds to a lower level of the first hierarchical Galois key set, and
   each of the Galois keys included in the second hierarchical Galois key set is generated by a combination of a plurality of elements included in the first hierarchical Galois key set which is a higher level.

4. The server of claim 2, wherein the server is configured to:

   determine, before generating the second hierarchical Galois key set, a generation order of the Galois keys included in the second hierarchical Galois key set, based on the number of key-switching operations required to generate each of the Galois keys; and
   sequentially generate each of the Galois keys of the second hierarchical Galois key set according to the generation order.

5. The server of claim 4, wherein the determining of the generation order for the second hierarchical Galois key set comprises, with respect to a complete graph in which each element included in the second hierarchical Galois key set is configured as a node, configuring a weight of an edge which connects each node by the number of key-switching operations required between two nodes, and using a minimum spanning tree for the complete graph to determine the generation order.

6. The server of claim 5, wherein the minimum spanning tree is obtained from the complete graph by using Prim's algorithm or Edmond's algorithm.

7. The server of claim 4, wherein a generation order of the first Galois key has priority over a generation order of the second Galois key.

8. The server of claim 5, wherein the weight of the edge is changed according to substitution of the overlapping decomposition operation.

9. A method for generating a hierarchical Galois key set for a homomorphic encryption rotation operation, the method comprising:

determining a generation order of Galois keys included in the hierarchical Galois key set; and generating each of the Galois keys included in the hierarchical Galois key set according to the generation order, wherein, in the generating of each of the Galois keys included in the hierarchical Galois key set, a decomposition operation for a second Galois key, which overlaps with a decomposition operation included in a generation process of a first Galois key previously generated, is substituted with a result of the decomposition operation for the first Galois key.

10. The method of claim 9, wherein the hierarchical Galois key set is generated by a combination of a plurality of elements included in a hierarchical Galois key corresponding to a higher level of the hierarchical Galois key set.

11. The method of claim 10, wherein the hierarchical Galois key set is generated by repeatedly performing a key-switching operation by using the elements included in the hierarchical Galois key corresponding to the higher level, and the key-switching operation comprises at least one decomposition operation.

12. The method of claim 11, wherein the determining of the generation order of the Galois keys included in the hierarchical Galois key set comprises, with respect to a complete graph in which each element included in the hierarchical Galois key set is configured as a node, configuring a weight of an edge which connects each node by the number of key-switching operations required between two nodes, and using a minimum spanning tree for the complete graph to determine the generation order.

13. The method of claim 12, wherein the minimum spanning tree is obtained from the complete graph by using Prim's algorithm or Edmond's algorithm.

14. The method of claim 12, wherein the weight of the edge is changed according to substitution of the overlapping decomposition operation.

15. A computer-readable non-transitory recording medium storing a computer program comprising at least one instruction configured to execute, by a processor, the method for generating a hierarchical Galois key set for a homomorphic encryption rotation operation according to one of claims 9 to 14.

fig.1

Client 200 — level-1' shift-r Galois key → Server 100

level-1 shift-$r_0$~$r_d$ Galois key

S201 —
pk(-a' * s + e', a')
Galois key (-as + e + C * s($x^{5^k}$), $a$) k=1

S202 —
pk'(-a' * s + e', a' + C') $\xrightarrow[\text{Galois key(j=1)}]{}$ rk1 (-a''' * s + e' + C' * s($x^5$), a''') k=1

S203 —
rk1 (-a''' * s + e' + C' * s($x^5$), $\alpha$''') $\xrightarrow[\text{Galois key(j=2)}]{}$ rk2 (-$a^0$ * s + e''' + C' * s($x^{5^2}$), $a^0$) k=2

⋮

fig.2

(a)

(b)

fig.3

fig.4a

fig.4b

13

fig.5

fig.6

**Input:** An $(r, \ell)$ Galois key,

$$gk_r^{(\ell)} = \{(b_{r,i}^{(\ell)}, a_{r,i}^{(\ell)})\}_{i=0,\cdots,\text{hdnum}_\ell - 1} \in (R_{Q_\ell P_\ell}^2)^{\text{hdnum}_\ell}$$

and an $(r', \ell')$ Galois key, where $\ell'$ is higher than $\ell$,

$$gk_{r'}^{(\ell')} = \{(b_{r',i}^{(\ell')}, a_{r',i}^{(\ell')})\}_{i=0,\cdots,\text{hdnum}_{\ell'} - 1} \in$$
$$(R_{Q_{\ell'} P_{\ell'}}^2)^{\text{hdnum}_{\ell'}}$$

**Output:** An $(r + r', \ell)$ Galois key, $gk_{r+r'}^{(\ell)} =$

$$\{b_{r+r',i}^{(\ell)}, a_{r+r',i}^{(\ell)}\}_{i=0,\cdots,\text{hdnum}_\ell - 1} \in (R_{Q_\ell P_\ell}^2)^{\text{hdnum}_\ell}$$

**for** $i = 0$ to $\text{hdnum}_\ell - 1$ **do**

$\quad (\tilde{b}, \tilde{a}) \leftarrow (b_{r,i}^{(\ell)}(X^{5^{r'}}), a_{r,i}^{(\ell)}(X^{5^{r'}}))$

$\quad (b_{r+r',i}^{(\ell)}, a_{r+r',i}^{(\ell)}) \leftarrow$ key-switching operation to $(\tilde{b}, \tilde{a})$

$\quad$ with the Galois key $gk_{r'}^{(\ell')}$.

**end**

**return** $\{(b_{r+r',i}^{(\ell)}, a_{r+r',i}^{(\ell)})\}_{i=0,\cdots,\text{hdnum}_\ell - 1}$

fig.7

**Input:** A public key $(b, a) \in R^2_{Q_{k-1}}$, a $(r, \ell')$ Galois key,
$$\mathrm{gk}_r^{(\ell')} = \{b_{r,j}^{(\ell')}, a_{r,j}^{(\ell')}\}_{j=0,\cdots,\mathrm{hdnum}_{\ell'}-1} \in$$
$$(R^2_{Q_{\ell'}P_{\ell'}})^{\mathrm{hdnum}_{\ell'}}, \text{ and the key level } \ell$$

**Output:** A $(r, \ell)$ Galois key,
$$\mathrm{gk}_r^{(\ell)} = \{b_{r,i}^{(\ell)}, a_{r,i}^{(\ell)}\}_{i=0,\cdots,\mathrm{hdnum}_{\ell}-1} \in (R^2_{Q_{\ell}P_{\ell}})^{\mathrm{hdnum}_{\ell}}$$

$(b', a') \leftarrow ([b(X^{5^r})]_{Q_{\ell}P_{\ell}}, [a(X^{5^r})]_{Q_{\ell}P_{\ell}}) \in R^2_{Q_{\ell}P_{\ell}}$

Decompose $a'$ into a vector $(a_0, \cdots, a_{\mu-1}) \in R^{\mu}_{P_{\ell}Q_{\ell+1}}$, where $a_j = [a']_{Q_{\ell',j}} + Q_{\ell',j} \cdot \tilde{e}_j$ for small $\tilde{e}_j$'s for $0 \leq j \leq \mu - 2$ and $a_{\mu-1} = [a']_{\check{Q}_{\ell',\mu-1}} + \check{Q}_{\ell',\mu-1} \cdot \tilde{e}_{\mu-1}$ for small $\tilde{e}_{\mu-1}$.

**for** $i = 0$ **to** $\mathrm{hdnum}_{\ell} - 1$ **do**

$\quad (\bar{b}, \bar{a}) \leftarrow (0, 0) \in R^2_{P_{\ell}Q_{\ell}}$

$\quad$ **for** $j \leftarrow 0$ **to** $\mu - 1$ **do**

$\quad\quad$ **if** $j = \mu - 1$ **then**

$\quad\quad\quad (\bar{b}, \bar{a}) \leftarrow$
$$(\bar{b}, \bar{a}) + (a_{\mu-1} + [P_{\ell} \cdot \hat{Q}_{\ell,i} \cdot [\hat{Q}_{\ell,i}^{-1}]_{Q_{\ell,i}}]_{\check{Q}_{\ell',\mu-1}}) \cdot$$
$$([b_{r,\mu-1}^{(\ell')}]_{P_{\ell}Q_{\ell+1}}, [a_{r,\mu-1}^{(\ell')}]_{P_{\ell}Q_{\ell+1}})$$

$\quad\quad$ **else**

$\quad\quad\quad (\bar{b}, \bar{a}) \leftarrow (\bar{b}, \bar{a}) + (a_j + [P_{\ell} \cdot \hat{Q}_{\ell,i} \cdot$
$$[\hat{Q}_{\ell,i}^{-1}]_{Q_{\ell,i}}]_{Q_{\ell',j}}) \cdot ([b_{r,j}^{(\ell')}]_{P_{\ell}Q_{\ell+1}}, [a_{r,j}^{(\ell')}]_{P_{\ell}Q_{\ell+1}})$$

$\quad\quad$ **end**

$\quad$ **end**

$\quad (b_{r,i}^{(\ell)}, a_{r,i}^{(\ell)}) \leftarrow (\lfloor P_{\ell}^{-1} \cdot \bar{b} \rceil, \lfloor P_{\ell}^{-1} \cdot \bar{a} \rceil) \in R^2_{Q_{\ell+1}} = R^2_{P_{\ell}Q_{\ell}}$

$\quad b_{r,i}^{(\ell)} \leftarrow b_{r,i}^{(\ell)} + b'$

**end**

**return** $\{(b_{r,i}^{(\ell)}, a_{r,i}^{(\ell)})\}_{i=0,\cdots,\mathrm{hdnum}_{\ell}-1}$

fig.8

Europäisches Patentamt

European Patent Office

Office européen des brevets

# EUROPEAN SEARCH REPORT

**Application Number**

EP 24 15 4576

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JOON-WOO LEE ET AL: "Hierarchical Galois Key Management Systems for Privacy Preserving AIaaS with Homomorphic Encryption", IACR, INTERNATIONAL ASSOCIATION FOR CRYPTOLOGIC RESEARCH , vol. 20220510:075851 10 May 2022 (2022-05-10), pages 1-20, XP061075280, Retrieved from the Internet: URL:https://eprint.iacr.org/archive/2022/532/1652169531.pdf [retrieved on 2022-05-10] * abstract * * Chapter 1: "Introduction" * * Chapter 3: "Proposed hierarchical Galois key generation for BFV and CKKS schemes" * * Chapter 4: "Efficient generation method of Galois key set" * * figures 1,6 * | 1-15 | INV. H04L9/00 |
| A | TIMOTHY DUFF ET AL: "Galois/monodromy groups for decomposing minimal problems in 3D reconstruction", ARXIV.ORG, CORNELL UNIVERSITY LIBRARY, 201 OLIN LIBRARY CORNELL UNIVERSITY ITHACA, NY 14853, 10 May 2021 (2021-05-10), XP081960683, * abstract * * Chapter 1: "Introduction" * | 1-15 | **TECHNICAL FIELDS SEARCHED (IPC)** H04L |

- / - -

The present search report has been drawn up for all claims

| Place of search | Date of completion of the search | Examiner |
|---|---|---|
| Munich | 17 June 2024 | Di Felice, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Application Number

EP 24 15 4576

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ARITA SEIKO ET AL: "Subring Homomorphic Encryption", 21 March 2018 (2018-03-21), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 112 - 136, XP047466187, ISBN: 978-3-540-74549-5 [retrieved on 2018-03-21] * abstract * * Chapter 1: "Introduction" * ----- | 1-15 | |
| | | | **TECHNICAL FIELDS SEARCHED (IPC)** |

The present search report has been drawn up for all claims

| Place of search | Date of completion of the search | Examiner |
|---|---|---|
| Munich | 17 June 2024 | Di Felice, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 412 143 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230012728